Europäisches Patentamt

European Patent Office

Office européen des brevets

(11) Publication number: **0 163 488**
A2

# EUROPEAN PATENT APPLICATION

(21) Application number: 85303622.6

(22) Date of filing: 22.05.85

(51) Int. Cl.⁴: **B 60 K 17/36**
B 60 G 5/00

(30) Priority: 26.05.84 DE 3419809

(43) Date of publication of application:
04.12.85 Bulletin 85/49

(84) Designated Contracting States:
AT BE CH DE FR GB IT LI LU NL SE

(71) Applicant: Fend, Fritz M.
Thurmayerstrasse 11
D-8400 Regensburg(DE)

(72) Inventor: Fend, Fritz M.
Thurmayerstrasse 11
D-8400 Regensburg(DE)

(74) Representative: Molyneaux, Martyn William et al,
LANGNER PARRY 52-54 High Holborn
London WC1V 6RR(GB)

(54) Cross-country vehicle.

(57) A cross-country vehicle has a centre beam (7) and on each longitudinal side thereof is disposed a wheel beam (1, 2), each wheel beam carrying at least three wheels (4). The wheels (4) are connected to each wheel beam by an axle (19) upon which is secured a sprocket (18). Drive for the wheels is derived from a drive shaft (21) carrying two sprocket wheels (20). The outer wheel axles (19) carry a single sprocket (18) whereas the inner wheel axles each carry two sprockets (18). A first group of chain transmissions formed by chains (22) is connected about only two, adjacent sprockets (18) and a second chain transmission formed by chains (23) is connected about a relevant one of the sprockets (20) to one of the further sprockets (18) so that when the drive shaft (21) is located between the two inner wheels so one chain (23) drives one set of wheels and the other chain (23) drives another set of wheels.

Fig.6

## CROSS-COUNTRY VEHICLE

This invention relates to a cross-country vehicle, that is to a vehicle for travelling across rough terrain such as in forests.

A known cross-country vehicle is disclosed in West German Offenlegungsschrift 2,437,476. Such a known cross-country vehicle, which exhibits good travelling behaviour in roadless terrain, has two spaced longitudinal wheel beams which are each articulated by a universal joint to be disposed on a respective side of a longitudinal centre beam of the vehicle, each wheel beam having at least three driven wheels. The drive of the individual wheels presents problems in such a cross-country vehicle.

The object of this invention is to provide a cross-country vehicle which is also optimally constructed as regards the drive for the individual wheels on the two wheel beams.

According to this invention there is provided a cross-country vehicle having a longitudinal centre beam and a wheel beam disposed on a respective side thereof, each wheel beam having at least three driven wheels and being articulated by an articulation means about a common axis passing transversely to the longitudinal axis of the centre beam, and each wheel beam being articulately connected to the centre beam by guide rods, characterised in that for each wheel beam there are two groups of chain transmissions each including a continuous chain and a respective sprocket wheel on each wheel axle, the first group having at least two chains each disposed about two sprocket wheels of adjacent axles commencing with the outer axles, and the second group has at least one chain the or each of which is disposed over a driving shaft sprocket wheel and a further sprocket wheel secured on the wheel axle, there being as many further sprocket wheels as there are chains in the second group.

Thus in the cross-country vehicle of this invention, two adjacent wheels on a wheel beam are mutually connected by a separate chain transmission of the first group, that is to say by a chain which is passed exclusively over sprocket wheels of the axles of the said two adjacent wheels, so that a propulsive connection from wheel to wheel exists via a separate chain transmission in each case. The axles of the two outer, i.e. front and rear, wheels on the relevant wheel beam, therefore, each carry only one sprocket wheel, whereas the axles of the remaining wheels are each provided with two spaced sprocket wheels. The

drive of the propulsively mutually connected wheels occurs through at least one chain transmission of a second group, whereby the chain transmission of the second group connects a sprocket wheel on the axle of a wheel to a sprocket wheel on a driving shaft on the relevant wheel beam.

A particularly simple drive is achieved by the use of chain transmissions so that a drive in which transmission elements rotating in an oil bath is avoided. The use of chain transmissions further has the fundamental advantage that the chains can absorb shocks which may occur when travelling over irregular terrain, without damage to the drive or to the power-transmitting elements of the drive. The constructions according to the invention further has the advantage that only relatively short chains are required for the individual chain transmissions, so that elements for re-tensioning the chains are also unnecessary. The construction according to the invention further results in a low overall height for the wheel beams, which is essential for the desired ground clearance of the cross-country vehicle and for the likewise desired low overall height of the vehicle.

The invention will now be described by way of example with reference to the accompanying drawings in which:-

Fig. 1 shows, in a simplified diagrammatic illustration a plan view of a cross-country vehicle in accordance with this invention;

Fig. 2 shows a rear elevation of the vehicle shown in Fig. 1 viewed in the direction of the arrow-headed line A of Fig. 1;

Fig. 3 shows a perspective view of one of the two wheel beams of the cross-country vehicle shown in Fig. 1;

Fig. 4 shows a left hand side elevation of one embodiment of the centre beam of the cross-country vehicle shown in Fig. 1;

Fig. 5 shows, in schematic form, a longitudinal vertical cross-section through one of the two wheel beams of the cross-country vehicle shown in Fig. 1; and

Fig. 6 shows a longitudinal horizontal cross-section of the wheel beam shown in Fig. 5.

In the figures like reference numerals denote like parts.

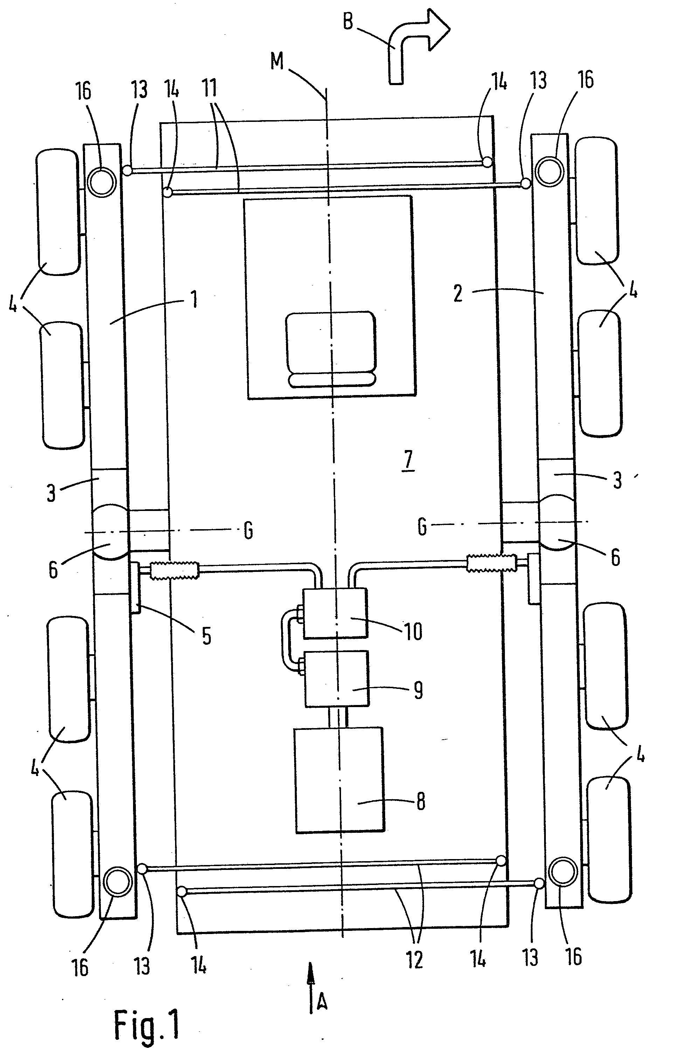

The cross-country vehicle shown in the figures has two parallel wheel beams 1 and 2 each equi-spaced about a longitudinal median axis M and disposed on a respective longitudinal side of a centre beam 7. Each wheel beam 1, 2 is formed by an elongate girder-like and box-like element which is increased in height at a median portion 3. As shown in Fig. 1 the wheel beams 1, 2 are located with their longitudinal extent in the longitudinal direction of the vehicle, indicated by arrow-headed line A. Each wheel beam 1 and 2 serves for the unsprung mounting of four driven wheels 4 which are provided on the outer longitudinal sides of the wheel beams and the wheels are equipped, for example, with low-pressure tyres exhibiting a degree of self-springing. A hydraulic motor 5, the output shaft of which is propulsively associated with the drive shafts of each of the wheels 4 via drive elements (not shown) accommodated in the relevant wheel beam 1 or 2, is provided on each wheel beam 1 and 2 for motive force of the vehicle.

Each wheel beam 1 and 2 is universally articulated in its median portion 3 by an articulation 6 to a respective longitudinal side of the centre beam 7 and the two articulations 6 are arranged on a common axis G oriented transversely or perpendicularly to the longitudinal direction of the vehicle (arrow-headed line A) and/or to the median axis M of the vehicle. Each articulation 6 is either a ball-and-socket joint or an articulation acting in a ball-and-socket fashion, that is to say, an articulation which permit pivotal movement of the wheel beams 1 and 2 not only about the horizontal axis G, but also about an axis parallel to the vehicle longitudinal axis M and about a further vertical axis likewise oriented perpendicularly to the axis G. Articulations acting in ball-and-socket fashion are, for example, such articulations that have a bolt attached to the centre beam 7, which bolt is encased by a joint sleeve which is in turn encompassed by a bush of resilient material, for example rubber, the bush being retained on a bracket to the appropriate wheel beam 1 or 2.

A drive motor 8, mounted on the axis M on the centre beam 7, drives a pump 9 for a hydraulic fluid (for example oil), the inputs and outputs of which form, together with a control valve device 10, parts of hydraulic medium flow circuits, in which the two hydraulic motors 5 are also arranged on the wheel beams 1 and 2. The hydraulic connections with the hydraulic motors 5, at least in the transitional region between the centre beam 7 and the wheel beams 1 and 2, are made via flexible hoses. In order to keep the movement of the hydraulic motors 5 as small as possible during rotation or pivoting of the wheel beams 1 and 2 about the articulations 6, the hydraulic motors 5 are retained on the wheel beams 1 and 2 in immediate proximity of the articulations 6.

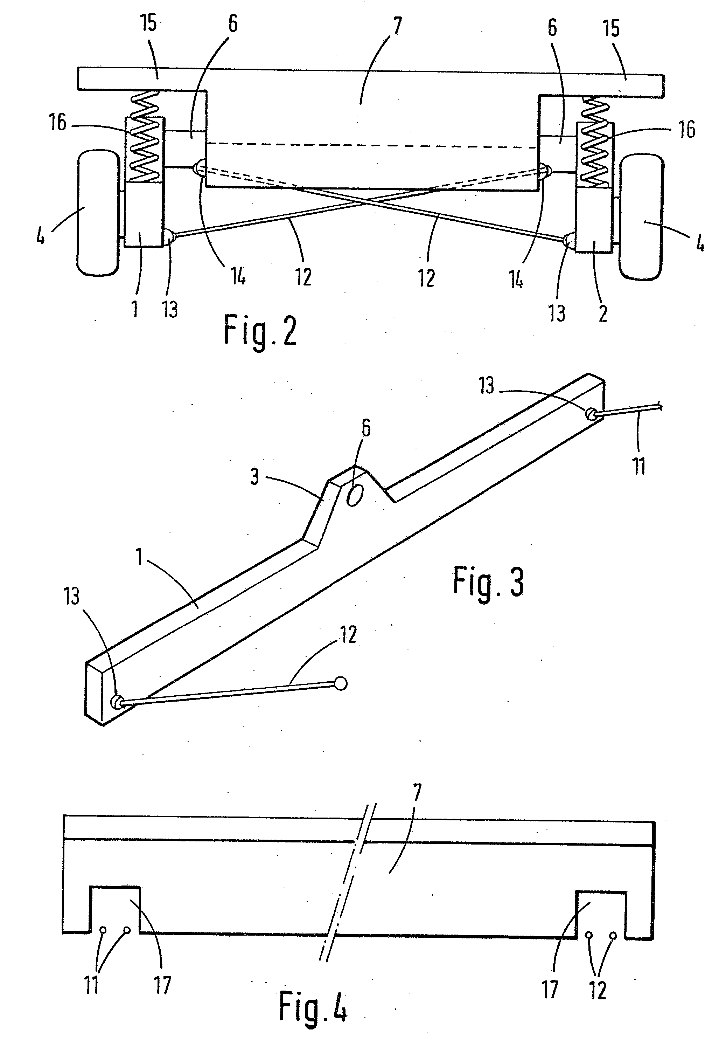

Each wheel beam 1 and 2 is connected to the centre beam 7 via two bar-shaped guide rods 11 and 12 constructed as pendulum stanchions. The guide rod 11 is provided at the front end of the relevant wheel beam 1 or 2, and the guide rod 12 is located at the rear end of the relevant wheel beam 1 or 2. The opposite ends of each guide rod 11 and 12 are both universally articulated by means of a ball-and-socket joint or an articulation acting in ball-and-socket fashion; one end articulation 13 is connected to an appropriate wheel beam 1 or 2, and the opposite end articulation 14 is connected to the centre beam 7. As particularly shown in Figs. 2 and 3, the articulations 13 are arranged on the wheel beams 1 and 2 so that they are located below the respective articulation 6 and are approximately equi-spaced thereabout in the longitudinal direction at opposing ends of the wheel beams 1 and 2. The articulations 6 and 13 on each wheel beam therefore form an isosceles triangle in a vertical plane.

As Fig. 2 shows, the two guide rods 11 and 12 provided respectively at the front end and at the rear end of the vehicle are oriented obliquely upwards towards the centre of the vehicle, starting from the articulation point 13, when the two wheel beams 1 and 2 are not rotated relative to the centre beam 7; that is to say, the wheel beams 1 and 2 and also the centre beam 7 are located with their respective longitudinal extent in a horizontal plane. As Figs. 1 and 2 further show, the articulation points 14 for the guide rods 11 and 12 are arranged so that the two guide rods 11 and 12 provided at the front end and at the rear end of the vehicle, respectively, cross or overlap each other. Thus the articulation 14 for the guide rod 12, the other end of which is articulated to the wheel beam 1, is located on that longitudinal side of the centre beam 7 which is adjacent to the wheel beam 2, that is to say closer to the wheel beam 2 than to the wheel beam 1. In the same manner, the articulation 14 for the guide rod 12, the other end of which is articulated to the wheel beam 2 is located closer to the wheel beam 1 than to the wheel beam 2. The articulations 14 for the two guide rods 11 are also arranged on the centre beam 7 at the front end of the vehicle in the same manner. The two wheel beams 1 and 2 are thus secured against tilting about the horizontal and vertical axis by the guide rods 11 and 12, in spite of the use of the articulations 6. In order to obtain a definite position of the centre beam 7 relative to the two wheel beams 1 and 2, the centre beam 7 has a frame part 15 which is provided on each of the two longitudinal sides of the centre beam 7 which is spaced above the wheel beams 1 and 2 and is braced against the ends of the wheel beams 1 and 2 respectively via four springs 16.

The articulation of the two wheel beams 1 and 2 to the centre beam 7 by means of the articulations 6 and the guide rods 11 and 12 constructed as pendulum stanchions has the advantage that shocks which are exerted upon the ends of the wheel beams 1 and 2 laterally or in the direction transverse to the longitudinal direction of the vehicle, when travelling over irregular terrain for example, cannot become operative as bending moments in the articulations 6, but are transmitted directly to the centre beam 7 by the guide rods 11 and 12 provided at the ends of the two wheel beams 1 and 2. The elements used for articulating the wheel beams 1 and 2 are therefore subject only to minimum loading even in the case of major lateral shocks to the wheel beams 1 and 2, whilst, due to the arrangement of the wheels 4 on the outer sides of the wheel beams 1 and 2 and due to the arrangement of the articulations 6 above the guide rods 11 and 12, it is ensured that these guide rods are normally stressed exclusively in traction. The guide rods 11 and 12 may therefore be constructed with a relatively small cross-section. In order that these guide rods may also transmit shock and/or compression forces to the centre beam 7 when travelling over irregular terrain, the guide rods 11 and 12 are of straight construction.

It is furthermore ensured by the above-described arrangement of the articulations 14 and by the above-described crossing of the guide rods 11 and 12, that these guide rods exhibit a comparatively great length, so that, when the wheel beams 1 and 2 pivot about the articulations 6 relative to the centre beam 7 whilst travelling over irregular terrain, track variations, caused by pivoting between the wheel beams 1 and 2 and the centre beam 7 or the articulations 14 thereon in the horizontal direction transverse to the longitudinal direction of the vehicle, are kept small, so that only a small track error is also obtained, which cannot impair the travelling characteristics of the cross-country vehicle.

In order to take into consideration the mutually contradictory requirements for greatest possible length of the guide rods 11 and 12, greatest possible ground-clearance and lowest possible overall height of the vehicle, in those places where the guide rods 11 and 12 are provided, longitudinally extending recesses 17 (shown in Fig. 4) are provided on the underside of the centre beam 7, which recesses supply the necessary clearance for the movement and/or pivoting of the guide rods 11 and 12. The low overall height is necessary in the case of the cross-country vehicle so as to prevent the vehicle overturning when travelling across a precipitous terrain.

Steering for the cross-country vehicle is effected by differential drive of the wheels provided on the two wheel beams 1 and 2. Thus, to turn, the wheels 4 located on the inside during the change of travel direction are braked and only the outer wheels 4 are driven, whilst, due to the pivotable arrangement of the wheel beams 1 and 2 and due to their bracing via the springs 16 against the centre beam 7, a diagonal loading and unloading of the wheels 4 on the two longitudinal sides of the vehicle is produced. For example, if a travel direction change is made in the direction arrow B in Fig. 1, then the two wheel beams 1 and 2 are pivoted relative to the centre beam 7 by braking the wheels 4 on the wheel beam 2 and by driving the wheels 4 on the wheel beam 1 such that the wheel beam 2 front wheel and the wheel beam 1 rear wheel are lightly loaded whereas the remaining wheels 4 are heavily loaded. By this means, the slip which inevitably occurs between the ground and the wheels 4 in the case of a travel direction change is greatly reduced, whereby the turning performance of the vehicle is improved and the wear of the tyres or wheels 4 is also greatly reduced.

The embodiment described above is particularly described and claimed in our co-pending West German Patent Application No. P 34 19 P 34 19 808.3.

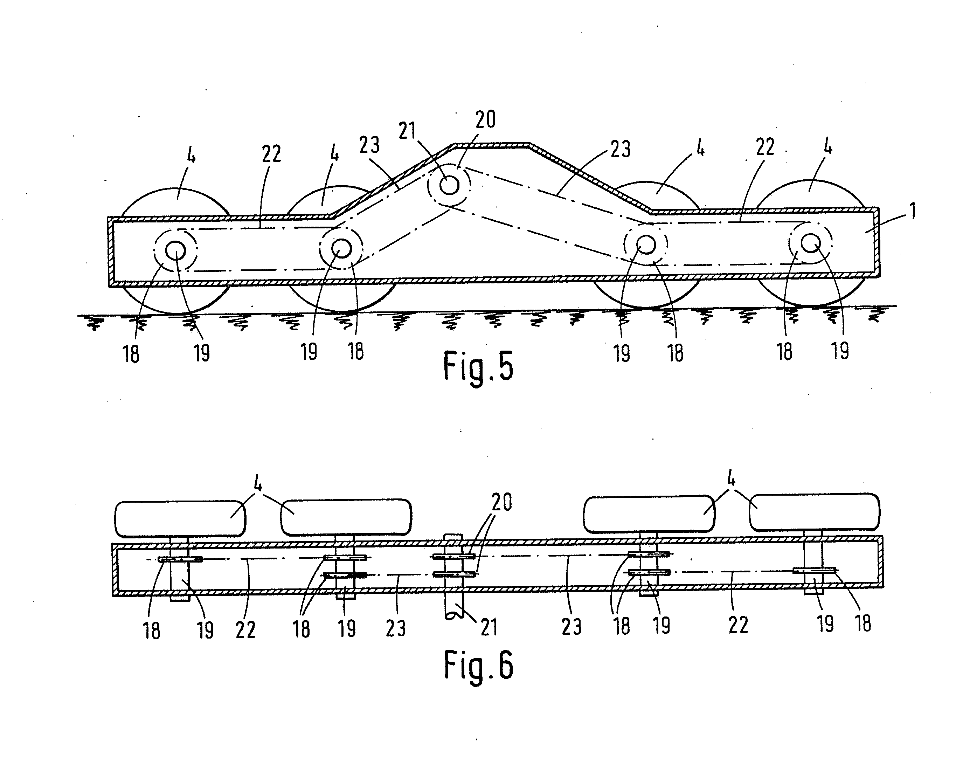

The drive system for the wheels 4 provided in each box-like wheel beam 1 or 2, is illustrated in detail in Figs. 5 and 6 and has a chain transmission. A sprocket wheel 18 is located on and secured to rotate with a respective axle 19 of each wheel 4. The axle 19 associated with the front and rear wheels 4 respectively carries only a single sprocket wheel 18, whereas two axially spaced sprocket wheels 18 are secured on each of the axles 19 of the two median wheels 4. Two further sprocket wheels 20 are axially spaced and secured on a driving shaft 21 which is formed by the output shaft of the hydraulic motor 5. It will be readily appreciated by those skilled in the art that the driving shaft 21 may also be the output shaft of a different type of drive motor, e.g. an electric motor, or a drive shaft which communicates, either directly or via a gearbox provided on the relevant wheel beam 1, 2, with a drive device on the centre beam 7, in which event either the shaft 21, or a further shaft coupled to the drive shaft, is constructed as a cardan shaft, so that pivotal movement of the relevant wheel beam 1 or 2 about the articulation 6 is possible.

The two outer pairs of axles 19 on each wheel beam 1, 2 are each mutually propulsively connected by an endless chain 22 which is passed over the sprocket wheel 18 of the foremost or rearmost wheel 4 on the wheel beam 1 or 2 and over the sprocket wheel 18 of the adjacent inner wheel. Two further endless chains 23 are passed over the further sprocket wheels 18 on the median wheels 4 and over a respective sprocket wheel 20 on the driving shaft 21 so that all the wheels are propulsively connected to the driving shaft 21. The use of a chain transmission has the fundamental advantage that it is possible to avoid a transmission arrangement running in an oil bath, and furthermore the chain transmission formed by the individual chains 22 and 23 is able to absorb shocks which are unavoidable when the vehicle is travelling across country, substantially better than in the case, for example, of a transmission arrangement exhibiting mutually meshing gear wheels. In addition to a simple design construction, the embodiment of the chain transmission illustrated in Figs. 5 and 6 has the advantage that only short chains 22 and 23 are required, so that devices for re-tensioning these chains are also unnecessary. Furthermore, the chain drive system herein disclosed produces a low overall height of the wheel beams 1 and 2, which is necessary in order to obtain the required ground clearance of the vehicle, but also in order to achieve the lowest possible overall height of the vehicle for the distance between the top side of the wheel beams 1 and 2 and the frame part 15, which distance is dictated by the spring travel.

The invention has been described above with reference to an exemplary embodiment. It is understood that modifications and variations are possible without thereby departing from the idea underlying the invention. Thus, for example, only three wheels could be provided on each wheel beam 1, 2 so that two chains 22 and one chain 23 would be required. Although it is preferred that the sprocket wheels 18 all have the same pitch circle diameter and number of teeth, they could differ and furthermore it is only preferred that the chains 22, 23 have the same size links.

CLAIMS:

1. A cross-country vehicle having a longitudinal centre beam (7) and a wheel beam (1, 2) disposed on a respective side thereof, each wheel beam having at least three driven wheels (4) and being articulated by an articulation means (6) about a common axis passing transversely to the longitudinal axis of the centre beam (7), and each wheel beam (1, 2) being articulately connected to the centre beam (7) by guide rods (11, 12), characterised in that for each wheel beam (1, 2) there are two groups of chain transmissions each including a continuous chain (22, 23) and a respective sprocket wheel (18) on each wheel axle (19), the first group having at least two chains (22) each disposed about two sprocket wheels (18) of adjacent axles (19) commencing with the outer axles, and the second group having at least one chain (23) the or each of which is disposed over a driving shaft sprocket wheel (20) and a further sprocket wheel (18) secured on the wheel axle (19), there being as many further sprocket wheels (18) as there are chains in the second group.

2. A cross-country vehicle according to claim 1, characterised in that the number of chains on a wheel beam (1, 2) is equal to the number of the wheels (4) provided on the wheel beam (1, 2).

3. A cross-country vehicle according to claim 1 or 2, characterised in that at least the sprocket wheels (18) provided on the axles (19) of the wheels (4) each have the same pitch circle diameter.

4. A cross-country vehicle according to any preceding claim, characterised in that the chains (22, 23) each have the same size links.

5. A cross-country vehicle according to any preceding claim, characterised in that there is provided an even number wheels (4) on each side of the wheel beam (1, 2), two driving shaft sprocket wheels (20) mounted on a common driving shaft (21) located between the two middle wheels and wherein the second group of chain transmissions has two chains (23), each of which is passed over an associated driving shaft sprocket wheel (20) and about a respective further sprocket wheel (18) of an axle (19) positioned to one side of the driving shaft (21) whereby the wheels (4) on each side of the driving shaft (21) are driven.

6. A cross-country vehicle according to claim 5, characterised in that the further sprocket wheel (18) is provided on both of the axles of the wheels (4) immediately adjacent to the driving shaft (21).

7.     A cross-country vehicle according to any preceding claim, characterised in that each wheel beam is formed from box section and the chain transmissions are located therein.

8.     A cross-country vehicle according to claim 5, characterised in that the driving shaft (21) is the output shaft of a drive device which is attached to the relevant wheel beam (1, 2).

9.     A cross-country vehicle according to claim 5 or 8, characterised in that the driving shaft (21) communicates propulsively through a universal shaft with a drive device on the centre beam (7) of the vehicle.

10.     A cross-country vehicle according to claim 5, 8 or 9, characterised in that the driving shaft (21) is provided adjacent the articulations means (6).

0163488

1/3

Fig.1

Fig. 2

Fig. 3

Fig. 4

Fig.5

Fig.6